# EUROPEAN PATENT APPLICATION

(11) **EP 3 095 981 A1**
(43) Date of publication of application: **23.11.2016**
(21) Application number: 15168817.3
(22) Date of filing: 22.05.2015
(51) Int. Cl.: F02B 19/10, F02B 31/00, F02M 21/02, F02D 19/10

(54) **COUNTER FLOW IGNITION IN INTERNAL COMBUSTION ENGINES**

(71) Applicant: Caterpillar Motoren GmbH & Co. KG, 24159 Kiel (DE)
(72) Inventor: HOLST, Hauke, 24161 Altenholz (DE); SIXEL, Eike Joachim, 24109 Kiel (DE)
(74) Representative: Kramer Barske Schmidtchen Patentanwälte PartG mbB

(57) **Abstract**

In general, configurations are disclosed that allow for a counter flow ignition, For example, an internal combustion engine (1) for operation at least partly on gaseous fuel under adjusted flow dynamics comprises an engine block cylinder unit section (3) providing a main combustion chamber (5) with a cylinder axis (12), a cylinder head (11) covering the main combustion chamber (5), a charge air system for providing a charge air-gaseous fuel mixture to the main combustion chamber (5), and an ignition system (31A-31D) mounted to the cylinder head (11) and having a first ignition jet release structure (35A, 35B) with transfer passages (39, 39A-39D) for providing ignition jets (37) into the main combustion chamber (5). The first ignition jet release structure (35A, 35B) is offset with respect to the cylinder axis (12), thereby defining together with the cylinder axis (12) two cylinder halves (45A, 45B) of the main combustion chamber (5). The transfer passages (39, 39A-39D) are configured in size and/or positioned at the first ignition jet release structure (35A, 35B) to provide more fuel into one of the cylinder halves (45A, 45B), the one being a first preferred ignition side of the first ignition jet release structure (35A, 35B).

## Description

### Technical Field

The present disclosure generally relates to an internal combustion engine, and more particularly, to a flow dynamic adjusted internal combustion engine with an ignition system, and in particular a pre-(combustion) and main-(combustion) chamber or an ignition fuel injector and a main combustion chamber, and a related method for operating an internal combustion engine.

### Background

Internal combustion engines can emit harmful oxides of nitrogen ("NOx") during operation. Those oxides form when nitrogen and oxygen, both of which are present in the charge air used for combustion, react within the main combustion chamber. Typically, the level of NOx formed increases as the peak combustion temperatures within the combustion chambers increase. As such, minimizing the peak combustion temperatures within the main combustion chamber generally reduces the emission of NOx.

For example, leaner charge air-gaseous fuel mixtures may be used in gaseous fuel operated internal combustion engines to reduce the peak combustion temperatures in the main combustion chamber, thus they may reduce the amount of harmful NOx emitted. Although a lean charge air-gaseous fuel mixture may - due to its relatively large air-to-fuel ratio when compared to a gas mixture having a stoichiometric air-to-fuel ratio by using more air in the mixture - advantageously lower NOx emissions, it also may result in an incomplete combustion within the main combustion chamber and a poor ignitability of the charge air-gaseous fuel mixture.

In general, pre-combustion chamber systems may be used to minimize the occurrence of incomplete combustion. In general, a pre-combustion chamber is in fluid communication with the main combustion chamber of the internal combustion engine via small flow transfer passages. Ignition of the fuel within the pre-combustion chamber creates a flame front of burning fuel that is jetted through the flow transfer passages into the main combustion chamber, thereby forming ignition jets for igniting the lean charge air-gaseous fuel mixture within the main combustion chamber.

Similar considerations apply to liquid fuel ignited internal combustion engines using fuel injectors for injecting fuel jets as ignition jets into the combustion chamber being filled with the lean charge air-gaseous fuel mixture.

In general, medium speed four stroke internal combustion engines may be operated with a gaseous fuel, such as natural gas. Furthermore, medium speed dual fuel engines are known that run on either liquid fuel or on gaseous fuel. During gaseous fuel operation, the charge air-gaseous fuel mixture may as mentioned above be ignited by injecting an ignition amount of a liquid fuel such as Diesel fuel as an ignition jet, which then ignites due to the pressure within the combustion engine. Alternatively, as also mentioned above a pre-combustion chamber configuration allows igniting a small amount of the combustion mixture within a pre-combustion chamber and releasing the ignited mixture into the (main) combustion chamber as ignition jets. In addition, dual fuel engines may comprise a - usually centrally arranged - liquid fuel main injector.

In general, it is an object of the present disclosure to provide for a combustion process for gaseous fuel operation that may be well defined and may use, for example, all or at least most of the gaseous fuel. In particular the starting phase of the combustion may affect the combustion process in this respect.

The present disclosure is directed, at least in part, to improving or overcoming one or more aspects of prior systems.

### Summary of the Disclosure

According to an aspect of the present disclosure, an internal combustion engine for operation at least partly on gaseous fuel under adjusted flow dynamics comprises an engine block cylinder unit section providing a main combustion chamber with a cylinder axis, a cylinder head covering the main combustion chamber, a charge air system for providing a charge air-gaseous fuel mixture to the main combustion chamber, and an ignition system mounted to the cylinder head and having a first ignition jet release structure with transfer passages for providing ignition jets into the main combustion chamber. The first ignition jet release structure is offset with respect to the cylinder axis, thereby defining together with the cylinder axis two cylinder halves of the main combustion chamber. The transfer passages are configured in size and/or positioned at the first ignition jet release structure to provide more fuel into one of the cylinder halves, the one being a first preferred ignition side of the first ignition jet release structure.

According to another aspect of the present disclosure, an internal combustion engine for operation at least partly on gaseous fuel under adjusted flow dynamics comprises an engine block cylinder unit section providing a main combustion chamber with a cylinder axis, a cylinder head covering the main combustion chamber, a charge air system for providing a charge air-gaseous fuel mixture to the main combustion chamber, and an ignition system mounted to the cylinder head and having at least one ignition jet release structure with transfer passages for providing ignition jets into the main combustion chamber. The at least one ignition jet release structure is offset with respect to the cylinder axis, and the transfer passages of the at least one ignition jet release structure are configured in size and/or positioned at the at least one ignition jet release structure to provide more fuel towards a preferred ignition side of the single ignition jet release structure that includes the cylinder axis of the main combustion chamber, thereby defining a preferred ignition side for the ignition jet release structure.

According to another aspect of the present disclosure, an internal combustion engine for operation at least partly on gaseous fuel under adjusted flow dynamics comprises an engine block cylinder unit section providing a main combustion chamber with a cylinder axis, a cylinder head covering the main combustion chamber, a piston displaceably delimiting the main combustion chamber, a charge air system for providing a charge air-gaseous fuel mixture to the main combustion chamber, and an ignition system mounted to the cylinder head and having a first ignition jet release structure with transfer passages for providing ignition jets into the main combustion chamber. The first ignition jet release structure is offset with respect to the cylinder axis, and the transfer passages of the first ignition jet release structure are configured in size and/or positioned at the first ignition jet release structure to provide more fuel at a preferred ignition side of the ignition jet release structure. The charge air system and/or the piston are configured to provide for a flow within the combustion chamber that is directed at least partly from the preferred ignition side onto the ignition jet release structure.,

According to another aspect of the present disclosure, a method for operating an internal combustion engine at least partly on gaseous fuel under adjusted flow dynamics within the main combustion chamber with a cylinder axis is disclosed. The method comprises the steps of forming a flow a charge air-gaseous fuel mixture within the main combustion chamber, and, from at least one ignition jet release structure offset from the cylinder axis, providing more and/or larger ignition jets into the main combustion chamber in a direction against the flow than in a direction with the flow.

The above aspects are unified by the common concept of providing an adjusted flow dynamics by orienting ignition jets with respect to defined flow conditions present in a combustion chamber of an internal combustion engine. In view of the various alternative conditions for flow and ignition systems, those aspects present alternative solutions specific to each of those cases recited in the aspects.

Other features and aspects of this disclosure will be apparent from the following description and the accompanying drawings.

### Brief Description of the Drawings

The accompanying drawings, which are incorporated herein and constitute a part of the specification, illustrate exemplary embodiments of the disclosure and, together with the description, serve to explain the principles of the disclosure. In the drawings:
Fig. 1 is a schematic drawing of a section of an internal combustion engine, specifically of a section of the engine block covered by a cylinder head with a pre-combustion chamber assembly;
Fig. 2 is a schematic top view into the main combustion chamber of an internal combustion engine for illustrating the flow dynamics of a first swirl flow embodiment;
Fig. 3 is a schematic top view into the main combustion chamber of an internal combustion engine for illustrating the flow dynamics of a further swirl flow embodiment;
Fig. 4 is a schematic top view of a part of the main combustion chamber of an internal combustion engine for illustrating the flow dynamics of a swirl flow further embodiment;
Figs. 5 and 6 are schematic cut views of a main combustion chamber for illustration of a tumble flow;
Fig. 7 is a schematic top view into the main combustion chamber of an internal combustion engine for illustrating the flow dynamics of a first tumble flow embodiment; and
Fig. 8 is a schematic top view into the main combustion chamber of an internal combustion engine for illustrating the flow dynamics of a further tumble flow embodiment.

### Detailed Description

The following is a detailed description of exemplary embodiments of the present disclosure. The exemplary embodiments described therein and illustrated in the drawings are intended to teach the principles of the present disclosure, enabling those of ordinary skill in the art to implement and use the present disclosure in many different environments and for many different applications. Therefore, the exemplary embodiments are not intended to be, and should not be considered as, a limiting description of the scope of patent protection. Rather, the scope of patent protection shall be defined by the appended claims.

The present disclosure is based in part on the realization that - when igniting a lean charge air-gaseous fuel mixture in a main chamber by ignition jets - in particular the quality of the ignition process is based on the contact-zone provided for the ignition jets and the lean charge air-gaseous fuel mixture and the turbulence level in those contact-zones. It was further realized that in particular the amount of ignited lean charge air-gaseous fuel mixture depends on the ignition jet penetration and the relative velocity between the ignition jets and the lean charge air-gaseous fuel mixture. It was further realized that moving the starting point of the ignition jets away from the center, the ignition jets may be arranged to overlap with a faster lowing section of the flow, thereby contacting and igniting more charge air-gaseous fuel mixture.

The present disclosure is further based in part on the realization that, to further reduce NOx-emission, the energy combusted within the pre-combustion chamber may be further decreased, while the same ignition performance is maintained. It was further realized that the latter may be achieved by increasing the relative velocity between the ignition jets and the lean charge air-gaseous fuel mixture and by that the turbulence level in the respective contact-zone.

The present disclosure is further based in part on the realization that one may align the relative flows between the ignition jets and the charge air-gaseous fuel mixture (at the time of injection) to maintain a sufficient ignition process/sufficient ignition jet penetration.

The ignition jets may be given by the ignition process parameters as well as the design of the ignition system and the design of the flow transfer passages.

In general, the flow system of the charge air-gaseous fuel mixture within a cylinder may comprise three types: a swirl flow and a tumble flow, or a flow field with rotation between swirl and tumble. For all types, rotational motion occurs about an axis of rotation. However, the position and orientation of the respective axis of rotation is different. For a swirl flow, the axis usually is aligned with the cylinder axis, i.e. may be more or less coincident with the cylinder axis or shifted with respect to the cylinder axis. For a tumble flow, the axis is essentially tilted with respect to the cylinder axis, e.g. perpendicular to the cylinder axis and may even be more complex such as bend or circular. Flow systems may comprise swirl flows and/or tumble flows.

In general, the formation of a respective flow system (swirl flow and/or tumble flow) may depend on the velocity of the piston when reciprocating, e.g. the engine speed and stroke amplitude, the diameter and shape of the main combustion chamber e.g. shape of piston and cylinder head, the pressure of the charge air, the timing of the valve openings including valve opening overlap between intake and exhaust valves, and the shape and directionality of the intake and/or exhaust channels.

The present disclosure may further be based at least in part on the realization that providing an asymmetric raising bowl bottom of a piston bowl may improve mixing of the combustion mixture or charge air with ignition jets or liquid fuel jets.

To increase the relative velocity between the lean mixture and the jets, a flow of the charge air-gaseous fuel mixture may be provided and additionally the underlying directions of the ignition jets and the lean charge air-gaseous fuel mixture may be directed at least partly against each other. For example, in the region of the overlap of the charge-air gaseous fuel mixture with one of the ignition jets, a flow of the charge air-gaseous fuel mixture may comprise a flow (vector) component that is directed against the direction of the ignition jet, thereby being directed at least partly against the ignition jet. Accordingly, the vector associated with the ignition jet and the vector associated with flow direction of the charge air-gaseous fuel mixture, when overlapping with the ignition jet understood as a respective counter flow section, extend under an angle of at least 90° (180° corresponding to being directed against each other, i.e. flows in opposite directions). For example, the vector associated with an injection direction of the ignition jet and the vector associated with the charge air-gaseous fuel mixture may extend under an angle of at least 120°, at least 135°, at least 150°, or at least 170°. In particular, the counter-flow as described above may be given for at least 50% or at least 70%, or at least 85% of the extent of the ignition jet. As disclosed herein, also the sizes and positions of the ignition jets may be varied to further increase the overlap with the flowing charge air-gaseous fuel mixture.

For example, the direction of the ignition jet-flow may be influenced by the angles and positions of the transfer passages of an ignition system, while the flow of the lean charge air-gaseous fuel mixture in the main chamber may be forced into a swirl in a manner that this flow runs against the flow of the ignition jets. Then, more lean charge air-gaseous fuel mixture may get in contact with the ignition jets and may be ignited even, for example, with leaner conditions in the pre-combustion chamber. Thus, for example, less amount of ignition energy may be needed for ignition and the mixture in the pre-combustion chamber can be made leaner. Leaner mixture in the pre-combustion chamber may lead to colder combustion temperatures and, therefore, to lower NOx-emissions.

The herein described flow enforcing technology may be based, for example, on flow generating systems as disclosed, for example, in the European patent application EP 15 160 394 filed by the same applicant on 23 March 2013 or the German patent application, entitled "PISTON TOP PROVIDING STRUCTURAL UNIT," filed by the same applicant on the same day herewith.

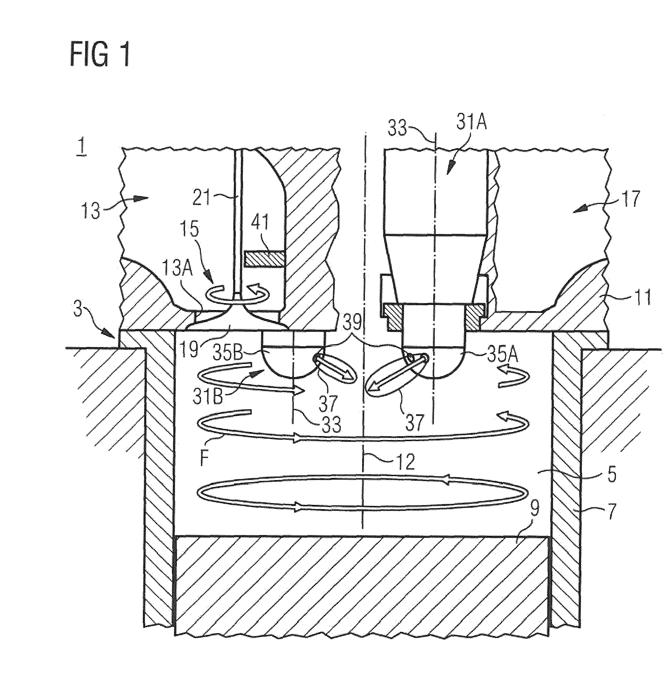

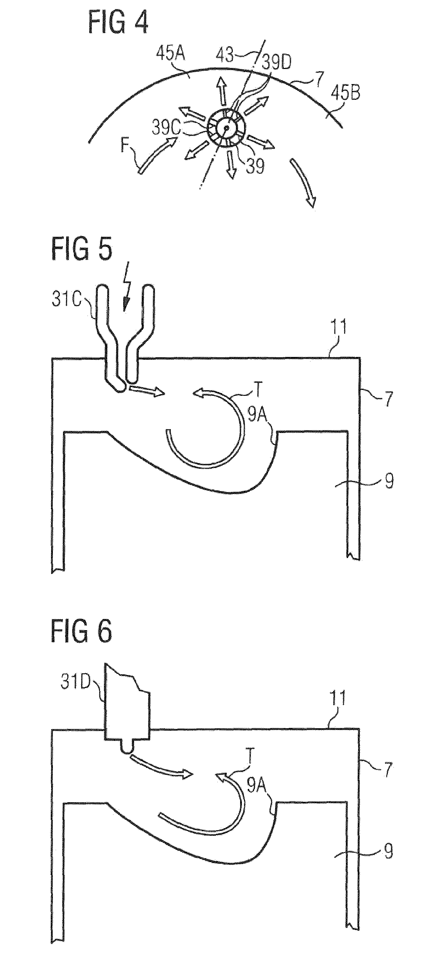

With reference to the drawings 1 to 8, the general concepts of the present disclosure are explained. In particular, the proposed counter-flow concept is explained in connection with Figs. 1 to 4 for a swirl flow and in connection with Figs. 5 to 8 for a tumble flow.

Fig. 1 shows schematically a cut view of an internal combustion engine 1, specifically a cylinder unit section of engine 1. Engine is operable at least partly on gaseous fuel and provides adjusted flow dynamics in form of a swirl flow.

In general, engine 1 includes, for example, one or more engine block cylinder unit sections 3, each providing a main combustion chamber 5. Main combustion chamber 5 is, for example, radially delimited by a cylinder liner 7 and axially delimited by a piston 9 and a cylinder head 11. Main combustion chamber 5 has a cylinder axis 12 extending along the center from the piston side to the cylinder head side. Usually, cylinder head 11 covers main combustion chamber 5 at the top of engine 1.

During operation of engine 1, piston 9 reciprocates in engine block cylinder unit section 3, thereby moving between a top dead center and a bottom dead center. For the purposes of the present disclosure, the internal combustion engine 1 is considered as an internal combustion engine operating at least partly on gaseous fuel such as a gas engine or a dual fuel engine. One skilled in the art will recognize, however, that the internal combustion engine may be any type of engine that would utilize an ignition concept as disclosed herein. For example, the internal combustion engine may be a medium speed dual fuel or gas engine manufactured by Caterpillar Motoren GmbH & Co. KG.

Furthermore, the internal combustion engine may be of any size, with any number of cylinders, and in any configuration (V-type, in-line, radial, etc.). Moreover, the internal combustion engine may be used to power any machine or other device, including locomotive applications, on-highway trucks or vehicles, off-highway trucks or machines, earth moving equipment, generators, aerospace applications, marine applications, pumps, stationary equipment, or other engine powered applications.

As further shown in Fig. 1, cylinder head 11 comprises inter alia one or more intake channels 13 for providing the charge air-gaseous fuel mixture through an intake opening 13A into main combustion chamber 5, wherein that fluid connection is controllable via an intake valve configuration 15.

Cylinder head 11 further comprises one or more exhaust valve configurations 17 (only partly indicated in Fig. 1) that fluidly connect main combustion chamber 5 with an exhaust gas system (not shown) via respective outlet openings.

As it is known in the art, respective intake valve configurations 15 and exhaust valve configurations 17 may each be formed by a valve disk 19 connected to a valve stem 21 and may be operated, for example, by rocker arm configurations.

At cylinder head 11, one or more ignition systems are mounted. In the schematic cut view of Fig. 1, exemplarily two ignition systems 31A, 31B are indicated that are positioned offset with respect to cylinder axis 12 of main combustion chamber 5 at opposite sides. In Fig.1, ignition system 31A is indicated before exhaust valve configuration 17, while ignition system 31B is indicated behind intake valve configuration 15 (such that only the section reaching into combustion chamber 5 is shown).

Ignition systems 31A, 31B extend along respective center axes 33. Exemplarily, center axis 33 is shown in Fig. 1 to run parallel to cylinder axis 12 but in general also some angle in a range depending on spatial conditions if the cylinder head structure may be present (e.g. tilt angles in the range from 0° to 70° with respect to cylinder axis 12). The distance between center axis 33 and cylinder axis 12 may be in the range from 0 % to 95 % of the cylinder radius.

At the end reaching into main combustion chamber, ignition systems 31A, 31B comprise ignition jet release structures 35A, 35B, respectively, for providing ignition jets 37 into main combustion chamber 5. Specifically, ignition jet release structures 35A, 35B comprise transfer passages 39 which form the starting point of ignition jets 37. In general, ignition jet release structures 35A, 35B may provide several ignition jets 35 azimuthally distributed around center axis 33. As described herein, various configurations with variations in size and position may be possible for transfer passages 39 to allow for the herein disclosed concepts of counter flow ignition.

In some embodiments, each of ignition systems 31A, 31B may be, for example, a pre-combustion chamber assembly configured for igniting the charge air-gaseous fuel mixture within main combustion chamber 5 based on ignition jets 37 that are generated by a combustion initiated within a pre-combustion chamber of the pre-combustion chamber assembly. In general, the pre-combustion chamber is delimited from main combustion chamber 5 by a pre-combustion chamber wall (herein assumed to be formed by ignition jet release structure). The pre-combustion chamber wall comprises flow transfer passages 39 through which a burning gaseous fuel air mixture, which was ignited within the pre-combustion chamber, is released into main combustion chamber 5. The pre-chamber combustion systems may be of any type know in the art, including spark ignited or laser ignited systems.

In some embodiments, ignition systems 31A, 31B may be liquid fuel injectors configured to provide amounts of liquid fuel adapted for igniting the charge air-gaseous fuel mixture. Usually, the liquid fuel is injected through transfer passages 39 of respective injector configurations, thereby forming ignition jets 37 of liquid fuel that extend into main combustion chamber 5.

While the herein disclosed concepts in principle may be used with only one ignition system, in particular for a swirl flow (as shown in Figs. 1 to 4), two or more ignition systems may allow a more symmetric ignition in light of the offset position of the ignition systems.

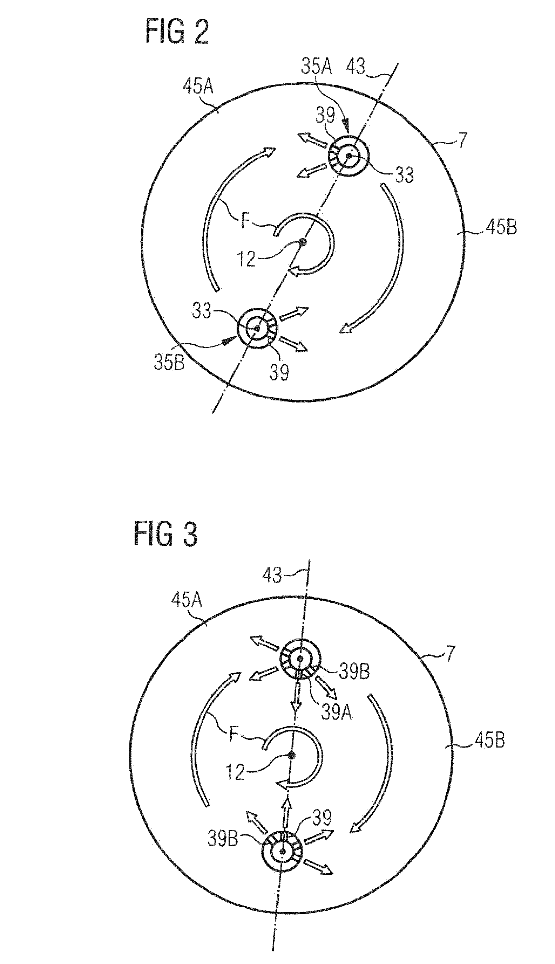

For the description of Fig. 2, ignition jet release structure 35A of ignition system 31A is referred to as a first ignition jet release structure, while ignition jet release structure 35B of ignition system 31B is referred to as a second ignition jet release structure.

As mentioned above, first ignition jet release structure 35A is offset with respect to cylinder axis 12. A plane defined by first ignition jet release structure 35A and cylinder axis 12 splits main combustion chamber in two cylinder halves. Similarly, second ignition jet release structure 35B and cylinder axis 12 define two respective cylinder halves of the main combustion chamber 5.

For the concept of aligned flow dynamics, in addition to the flow dynamic of ignition jets 37, a specific flow of the charge air-gaseous fuel mixture within combustion chamber 5 may be enforced.

As exemplarily shown in Fig. 1, internal combustion engine 1 is configured to create a swirl flow F in combustion chamber 5 that circularly flows around cylinder axis 12. Flow F may be, for example, generated by a specifically configured shape of intake channel 13 or intake opening 13A, for example by introducing a swirl generating element 41 into the flow of the charge air-gaseous fuel mixture thereby generating a rotation upstream of valve disk 19, and/or a specifically configured piston top shape (see also Figs. 5 and 6 for a tumble flow). An additional or alternative flow enforcement may be performed via a swirl section provided at a valve stem with at least one swirl generating element as disclosed in the above mentioned applications.

Flow system F is directed against one side of ignition jet release structures 35A, 35B such that at least some of ignition jets 37 are directed at least partly against the respective local flow direction.

Referring again to the flow dynamic of the charge air-gaseous fuel mixture, a single swirl may be formed that provides a flow "around" main combustion chamber 5. Accordingly, the charge air-gaseous fuel mixture flows along the side wall of main combustion chamber 5 in azimuthal direction as indicated in Fig. 1 by a "3D-like" indicated arrows (i.e. extending in and out of the plan of drawing) and in Figs. 2 to 4 by a sequence of arrows. It is noted, that the arrows are for illustration purposes only and illustrate that flow system F (exemplarily essentially a swirl system) comprises flow directions that at least partly are directed against respective ignition jets 37. In other words, a counter flow section may be defined by a flow direction that is essentially directed against a respective injection direction of an associated ignition jet 37. Accordingly, ignition jets 37 are confronted with a counter flow situation and reach a larger volume of charge air-gaseous fuel mixture for igniting the gaseous fuel-charge air mixture, in particular in a more complete manner as it would occur without a counter flow configuration.

As in general the ignited volume depends on the formation of the ignition jets and the velocity of the counter flow section, azimuthally adapting the size and/or number of ignition jets 37 (and thus of transfer passages) to increasingly face the counter flow within the counter flow sections may improve the ignition.

Simulations and/or measurements of the flow system and, thus, a swirl system (and/or a tumble system as shown in Figs. 5 to 8) within the main combustion chamber may be performed based on specific parameters selected for a specific internal combustion engine. Accordingly, the extent and velocity distribution of the swirl within main combustion chamber 5 may be determined during the planning phase and set accordingly such that, including a respective adjustment of the flow transfer passages and respective ignition jet formation, the hereby disclosed counter flow concept is realized in the internal combustion engine.

In the following, exemplary embodiments are disclosed that use a counter-flow concept to increase ignition performance.

Specifically, Fig. 2 shows a top view into combustion chamber of Fig. 1, wherein ignition systems 31A and 31B, specifically center axes 33 of first and second ignition jet release structures 35A, 35B are positioned offset from and oppositely with respect to cylinder axis 12.

Center axis 33 of ignition systems 31A and cylinder axis 12 define a separating line 43. Thereby, first ignition jet release structure 35A defines together with cylinder axis 12 two cylinder halves 45A and 45B of main combustion chamber 5. In light of the symmetric set up, second ignition jet release structures 35B defines the same two cylinder halves 45A and 45B of main combustion chamber 5 as its center axis also lies on separating line 43.

For each ignition systems 31A and 31B, two transfer passages are schematically indicated that have their openings at the half of combustion chamber 5 from which - with respect to each ignition system 31A and 31B - flow F is directed onto the respective ignition system 31A and 31B. Accordingly, transfer passages 39A, 39B of first ignition jet release structure 35A are positioned at first ignition jet release structure 35A to provide more fuel into cylinder half 45A, the one being herein referred to as a first preferred ignition side of first ignition jet release structure 35A.

Similarly, transfer passages 39C, 39D of second ignition jet release structure 35B are positioned at first ignition jet release structure 35B to provide more fuel into cylinder half 45B, the one being herein referred to as a first preferred ignition side of second ignition jet release structure 35B.

The first preferred ignition side and the second preferred ignition side face in the same rotation direction with respect to cylinder axis 12 such that in particular first ignition jet release structure 35A and second ignition jet release structure 35B provide for a common preferred rotational ignition direction that, in particular, is directed against flow F. Accordingly, the respective ignition jets reach deeper and may provide for a better ignition.

As can be seen, in the embodiment of Fig. 2, exemplarily no transfer passage was provided for injecting along the direction of flow F, i.e. first ignition jet release structure 35A does not have a transfer passage forming an ignition jet into cylinder half 45B and similarly, second ignition jet release structure 35B does not have a transfer passage forming an ignition jet into cylinder half 45A. Accordingly, for first ignition jet release structure 35A, a combined opening area of those transfer passages 39 releasing fuel into the preferred ignition side 45A is larger than a combined opening area of those transfer passages 39 (not existing in Fig. 2) not releasing fuel into the preferred ignition side 45A. The same applies to ignition jet release structure 35B.

The embodiment shown in Fig. 3 includes schematically two more transfer passages for each ignition jet release structure 35A, 35B. One of them (35A) being directed radially inward, the other one (39B) pointing slightly backward, i.e. at least partly in the direction of the flow. Exemplarily no transfer passage is provided for generating an ignition jet towards cylinder liner 7.

Due to the lacking counter-flow situation, ignition jets originating from those transfer passages 39A, 39B differ in their effect on igniting respective volumes of charge air-gaseous fuel mixture.

As in the case of the embodiment shown in Fig. 2, more ignition jets face flow F, and a larger combined opening area of those transfer passages 39 releasing fuel into the preferred ignition side 45A is given.

In general, transfer passages may be provided at all sides (e.g. depending on the distance to cylinder liner 7), as long as the generation of a preferred ignition side is achieved. Thus, the side facing flow F receives above fuel amounts and/or ignition jets and/or ignition activity that is above the angular average.

Besides the positioning of transfer passages, also the size of the same may be used to form a preferred ignition side.

As an example, the embodiment shown in Fig. 4 includes five transfer passages for each ignition jet release structure 35A, 35B. As schematically indicated, the transfer passages 39C at the preferred ignition side 45A are larger in size than the remaining transfer passages. Therefore, larger ignition jets face in the direction against flow F, thereby again providing more fuel into the respective cylinder half, and providing a larger combined opening area of those transfer passages 39 releasing fuel into the preferred ignition side 45A. Moreover, it is indicated that transfer passages 39D facing against cylinder liner 7 are the smallest in size, while transfer passages 39E have a medium size to at least provide for some ignition downstream in flow direction.

Referring to Figs. 5 to 8, the implementation of the herein disclosed concept of an counter flow ignition is illustrated for a tumble flow T. Fig. 5 illustrates schematically an offset pre-chamber ignition system 31C, while Fig. 6 illustrates a liquid fuel based ignition system 31D.

The shape of piston 9 allows, for example, the formation of a specific tumble flow of the charge air fuel mixture within the combustion chamber during the reciprocation of piston 9. Tumble flow T is generated by an asymmetrical raising bowl bottom 9A of piston 9 as schematically indicated in the cut views of Fig. 5 and 6. The tumble flow may be configured to result in a combustion process that reaches the complete or at least a large as possible portion of the charge air-gaseous fuel mixture at a desired temporal behavior, for example, by providing ignition jets that face the direction of tumble flow T.

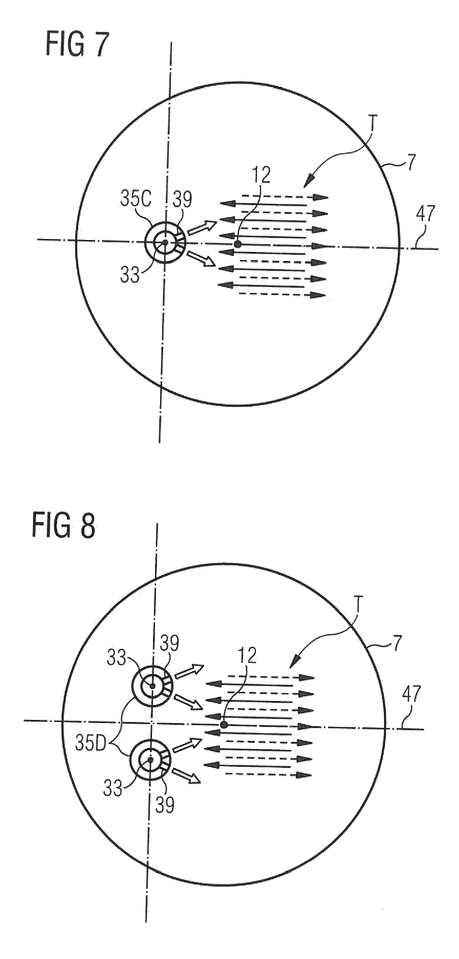

Figs. 7 and 8 show respective schematic top views into combustion chambers, wherein tumble flows T were generated. The respective tumble flows are illustrated by solid lines representing the flow at the top portion of main combustion chamber 5 (close to cylinder head 11) and dashed lines representing the flow at the bottom portion of main combustion chamber 5 (close to piston 9).

In Fig. 7, only one single ignition jet release structure 35C is provided for implementing the ignition. Exemplarily, ignition jet release structures 35C, specifically its center axis, is arranged on a plane 47 extending through cylinder axis 12 along the flow direction of tumble flow T. Despite the resulting asymmetry from the geometrical point of view, in light of tumble flow T, increasing the ignition at the side directed towards tumble flow T may allow a well-defined ignition process.

Exemplarily, Fig. 7 shows like Fig. 2 schematically only transfer passages 39 pointing against the flow direction of tumble flow T, thereby indicating that more fuel is provided into that direction, and that a larger combined opening area of those transfer passages releasing fuel into that direction is provided. However, modifications as discussed above e.g. in connection with Figs. 3 and 4 may be applied.

In other words, transfer passages of the at least one ignition jet release structure 35C are configured in size and/or positioned at the at least one ignition jet release structure 35C to provide more fuel in the direction of the one of the cylinder halves not having the at least one ignition jet release structure 35C therein, thereby defining a preferred ignition side for ignition jet release structure 35C.

Fig. 8 shows a further embodiment having a pair of ignition jet release structures 35D that allow extending a lateral range over which tumble flow T is subjected to ignition jets. Exemplarily, ignition jet release structures 35D are arranged symmetrically with respect to plane 47 extending through cylinder axis 12 along the flow direction of tumble flow T.

Thus, the embodiment of Fig. 8 is an example of an ignition system that has at least two ignition jet release structures 35D displaced with respect to cylinder axis 12, where transfer passages 39 of the at least two ignition jet release structures 35D are configured in size and/or positioned (at the respective one of the at least two ignition jet release structures) to provide more fuel into a preferred common ignition side 45C of the at least two ignition jet release structures 35D that includes center axis of main combustion chamber 5. In other words, two cylinder portions of main combustion chamber 5 are defined by the offset position, and one cylinder portion having the at least one ignition jet release structure positioned therein. Then, as shown in Fig. 7, more ignition fuel may be provided in the cylinder portion not having the at least one ignition jet release structure 35D therein.

### Industrial Applicability

The herein disclosed counter-flow configurations may allow operation of an internal combustion engine with ignition jets that are directed against the swirl direction, thereby increasing the turbulence level and the ignited volume within the main combustion chamber.

The description of a pre-chamber Otto-Gas engine is exemplary only. The described arrangement could also be applied to a Diesel-Gas engine like a Micro-Pilot (Diesel) ignited Otto engine, or a Diesel ignited Dual-Fuel engine with one or two fluid injection systems. The ignition jets will be formed by the burning Diesel sprays, in particular extending through the charge air-gaseous fuel mixture within the main combustion chamber. The above discussed configurations of the transfer passages as well as the formation and orientation of the ignition jets will be equally applicable to those types of engines such as injector based engines using, for example, similar transfer passages fluidly connecting a chamber within the injector tip with the main combustion chamber.

With respect to the configurations of the swirl generating elements disclosed herein, in some configurations, an uneven distribution of swirl generating elements may be provided. The uneven distribution or shape may affect, for example, the passing charge air-gaseous fuel mixture asymmetrically with respect to intake opening, thereby creating an asymmetric passing of the charge air-gaseous fuel mixture by the valve disk.

Referring again to the flow dynamic of ignition jets 37, an ignition jet may generally not need to extend exactly in radial direction (with respect to center axis 33) but instead extend under an inclination with respect to a radial direction as well as an axial direction with respect to center axis 33. Specifically, the inclination may be characterized by a first (azimuthal) inclination angle α that is defined within a plane orthogonal to center axis 33 and a second (elevation) inclination angle β defined within a plane along center axis 33.

For example, assuming that an ignition jet has a (main) injection direction V_{J}, that injection direction V_{J} comprises an azimuthal inclination component V_{Jα} with respect to a respective radial direction associated with an origin position of ignition jet 35.

To provide such an inclined extension of an ignition jet into main combustion chamber 5, a flow transfer passage 39 may be inclined with respect to the radial direction similar to the ignition jets in an azimuthal direction as well as in an elevation direction. For example, a center axis of the respective passage 39 may be inclined by the (azimuthal) angle α with respect to the respective radial direction associated with respective passage 39. The origin position (starting point) of an ignition jet and/or the radial direction of the through hole may be, for example, associated with an outlet side of the respective passage 39.

In addition, the second (elevation) inclination angle β with respect to the plane along center axis 33 directs the ignition jet towards piston 9. Accordingly, such an ignition jet reaches into main combustion chamber 5 and main injection direction V_{J} comprises an elevation inclination component V_{Jβ} with respect to a respective radial direction.

For example, first (azimuthal) inclination angle α may be in the range of 5° to 85° such as around 45° and second (elevation) angle β may be in the range from 0° to 110° such as around 30°.

In some embodiments, all of ignition jets 35 (as well as for example all flow transfer passages 39) may be inclined by the same azimuthal angle α and/or the same elevation angle β with respect to a respective radial direction. In some embodiments, the azimuthal angel α and/or β of a respective ignition jet 35 (and for example a respective flow transfer passages 39) may be adapted to a specific flow direction V_{F} of a respective counter flow section C described below.

Moreover, the flow transfer passages will not need to have the same orientation or size. They could start in different layers and end in different layers. Furthermore, the distribution of flow transfer passages 39 could be asymmetrical with respect to pre-combustion chamber or symmetric but show different sizes of transfer passages.

With respect to the angles defined above, the radial direction may be defined by radial vector extending from center axis 33 through an outlet side of the respective flow transfer passages towards the cylinder liner 7 in a radial manner. Similarly, the origin position of an ignition jet 35 may be that outlet side of the respective flow transfer passage.

Although the preferred embodiments of this invention have been described herein, improvements and modifications may be incorporated without departing from the scope of the following claims.

## Claims

1. An internal combustion engine (1) for operation at least partly on gaseous fuel under adjusted flow dynamics, the engine (1) comprising:
an engine block cylinder unit section (3) providing a main combustion chamber (5) with a cylinder axis (12);
a cylinder head (11) covering the main combustion chamber (5);
a charge air system for providing a charge air-gaseous fuel mixture to the main combustion chamber (5); and
an ignition system (31A-31D) mounted to the cylinder head (11) and having a first ignition jet release structure (35A, 35B) with transfer passages (39, 39A-39D) for providing ignition jets (37) into the main combustion chamber (5), wherein the first ignition jet release structure (35A, 35B) is offset with respect to the cylinder axis (12), thereby the first ignition jet release structure (35A, 35B) defining together with the cylinder axis (12) two cylinder halves (45A, 45B) of the main combustion chamber (5),
wherein the transfer passages (39, 39A-39D) of the first ignition jet release structure (35A, 35B) are configured in size and/or positioned at the first ignition jet release structure (35A, 35B) to provide more fuel into one of the cylinder halves (45A, 45B), the one being a first preferred ignition side of the first ignition jet release structure (35A, 35B).

2. The internal combustion engine (1) of claim 1, wherein the ignition system (31) comprises a second ignition jet release structure (35A, 35B) with transfer passages (39, 39A-39D) and being offset with respect to the cylinder axis (12) and the first ignition jet release structure (35A, 35B), wherein the transfer passages (39, 39A-39D) of the second ignition system (31) are configured in size and/or positioned at the second ignition jet release structure (35A, 35B) to provide more fuel into a second preferred ignition side of the second ignition jet release structure (35A, 35B), and
the first preferred ignition side and the second preferred ignition side face in the same rotation direction with respect to the cylinder axis (12) such that in particular the first ignition jet release structure (35A, 35B) and the second ignition jet release structure (35A, 35B) provide for a common preferred rotational ignition direction.

3. The internal combustion engine (1) of claim 1 or claim 2, wherein the charge air system and/or the piston (9) are configured to provide for a swirl flow (F) within the combustion chamber (5), and the preferred ignition side is directed at least partly against the flow direction of the swirl flow (F).

4. An internal combustion engine (1) for operation at least partly on gaseous fuel under adjusted flow dynamics, the engine (1) comprising:
an engine block cylinder unit section (3) providing a main combustion chamber (5) with a cylinder axis (12);
a cylinder head (11) covering the main combustion chamber (5);
a charge air system for providing a charge air-gaseous fuel mixture to the main combustion chamber (5); and
an ignition system (31A-31D) mounted to the cylinder head (11) and having at least one ignition jet release structure (35C, 35D) with transfer passages (39, 39A-39D) for providing ignition jets (37) into the main combustion chamber (5), wherein the at least one ignition jet release structure (35C, 35D) is offset with respect to the cylinder axis (12),
wherein the transfer passages (39, 39A-39D) of the at least one ignition jet release structure (35C, 35D) are configured in size and/or positioned at the at least one ignition jet release structure (35C, 35D) to provide more fuel towards a preferred ignition side of the single ignition jet release structure (35C, 35D) that includes the cylinder axis (12) of the main combustion chamber (5), thereby defining a preferred ignition side for the ignition jet release structure (35C, 35D).

5. The internal combustion engine (1) of claim 4, wherein the charge air system and/or the piston (9) are configured to provide for a tumble flow (T) within the combustion chamber (5), and the preferred ignition side is directed at least partly against the flow direction of the tumble flow (T).

6. The internal combustion engine (1) of claim 4 or claim 5, wherein the ignition system (31A-31D) has only a single ignition jet release structure (35C) displaced with respect to the cylinder axis (12), and the transfer passages (39, 39A-39D) of the single ignition jet release structure are configured in size and/or positioned at the single ignition jet release structure (35C) to provide more fuel towards the preferred ignition side of the single ignition jet release structure (35C) that includes the cylinder axis (12) of the main combustion chamber (5).

7. The internal combustion engine (1) of claim 4 or claim 5, wherein the ignition system (31A-31D) has at least two ignition jet release structures (35D) displaced with respect to the cylinder axis (12), and the transfer passages (39, 39A-39D) of the at least two ignition jet release structures (35D) are configured in size and/or positioned at the respective one of the at least two ignition jet release structures (35D) to provide more fuel into a preferred common ignition side of the at least two ignition jet release structures (35D) that includes the cylinder axis (12) of the main combustion chamber (5).

8. An internal combustion engine (1) for operation at least partly on gaseous fuel under adjusted flow dynamics, the engine (1) comprising:
an engine block cylinder unit section (3) providing a main combustion chamber (5) with a cylinder axis (12);
a cylinder head (11) covering the main combustion chamber (5);
a piston (9) displaceably delimiting the main combustion chamber (5);
a charge air system for providing a charge air-gaseous fuel mixture to the main combustion chamber (5); and
an ignition system (31A-31D) mounted to the cylinder head (11) and having a first ignition jet release structure (35A-35D) with transfer passages (39, 39A ,39B) for providing ignition jets (37) into the main combustion chamber (5), wherein the first ignition jet release structure (35A-35D) is offset with respect to the cylinder axis (12),
wherein the transfer passages (39, 39A-39D) of the first ignition jet release structure (35A-35D) are configured in size and/or positioned at the first ignition jet release structure (35A-35D) to provide more fuel at a preferred ignition side of the ignition jet release structure (35A-35D), and
the charge air system and/or the piston (9) are configured to provide for a flow within the combustion chamber (5) that is directed at least partly from the preferred ignition side onto the ignition jet release structure (35A-35D).

9. The internal combustion engine (1) of any of the preceding claims, wherein a combined opening area of those transfer passages (39) releasing fuel into the preferred ignition side is larger than a combined opening area of those transfer passages (39B) not releasing fuel into the preferred ignition side; and/or
the transfer passages (39, 39A-39D) provide for an asymmetric extent of ignition jets (35) that is increased at the preferred ignition side.

10. The internal combustion engine (1) of any of the preceding claims, wherein ignition system (31A-31D) is and in particular the transfer passages (39, 39A-39D) are arranged to provide ignition jets (37) through the transfer passages (39, 39A-39D) into the main combustion chamber (5) that extend along injection directions and provide for a counter-flow configuration with respect to the flow (F) within the combustion chamber at the time of injection; and/or
the internal combustion engine (1) is further configured to generate a flow system (F) of the charge air-gaseous fuel mixture within the main combustion chamber (5) in particular by a specifically configured intake channel (13) a specifically configured intake opening (13A), for example by comprising swirl generating element (41), and/or a specifically configured piston top shape, and the flow system (F) includes at least one counter flow section that at least partly spatially overlaps with a respective one of the ignition jets (37) and has a flow direction directed at least partly against the respective injection direction.

11. The internal combustion engine (1) according to any of the preceding claims, wherein an azimuthal inclination angle and/or an elevation inclination angle of a respective ignition jet (37) and/or the respective flow transfer passage (39, 39A-39D) are adapted to a specific flow direction of a respective counter flow section, and/or
wherein the flow transfer passages (39, 39A-39D) have specifically adjusted orientations such as starting points in different axial position and ending points in different axial positions and/or being asymmetrically distributed of the ignition jet release structure, and/or
at least one of the injection directions comprises an axial inclination component with respect to a center axis (33) associated with the main combustion chamber (5), and, in particular, an elevation inclination angle (β) with respect to a plane perpendicular to the center axis (33) of the main combustion chamber (5), and wherein in particular the azimuthal inclination angle (α) is in the range of 5° to 85° and/or the elevation inclination angle (β) is in the range from 0° to 110°.

12. The internal combustion engine (1) according to any of the preceding claims, wherein
the flow system (F) comprises a single swirl, for example providing a flow around the center axis (33) of the main combustion chamber (5), or multiple swirls, for example providing a flow around multiple axes at least one being displaced from the center axis (33) of the main combustion chamber (5), and/or one or more tumble flows in the main combustion chamber (5).

13. The internal combustion engine (1) according to any of the preceding claims, further configured as a gaseous fuel operated engine with a pre-chamber, or pre-chamber spark plug (as part of the ignition source) or as a Diesel-Gas engine operable with liquid fuel and/or gaseous fuel such as a liquid fuel ignited open chamber dual fuel engine with one or more fuel injectors (as part of the ignition source), or a micro-pilot injection ignited pre-chamber Diesel-Gas or dual fuel engine.

14. A method for operating an internal combustion engine (1) at least partly on gaseous fuel under adjusted flow dynamics within the main combustion chamber (5) with a cylinder axis (12), comprising:
forming a flow (F, T) of a charge air-gaseous fuel mixture within the main combustion chamber (5); and
from at least one ignition jet release structure offset from the cylinder axis (12), providing more and/or larger ignition jets (37) into the main combustion chamber (5) in a direction against the flow (F, T) than in a direction with the flow (F, T).

15. The method of claim 14, wherein, for a swirl flow, more and/or larger ignition jets are provided with a direction component in an azimuthal direction around the cylinder axis (12) than in the opposing azimuthal direction, and
for a tumble flow, more and/or larger ignition jets are provided with a direction component towards the cylinder axis side than away therefrom.
